# DEMANDE DE BREVET EUROPEEN

(11) **EP 3 623 227 A1**
(43) Date de publication de la demande: **18.03.2020**
(21) Numéro de dépôt: 19197133.2
(22) Date de dépôt: 12.09.2019
(51) Int. Cl.: B60R 19/50, F21S 43/20, B60Q 1/26

(54) **ELÉMENT DE CARROSSERIE RÉTROÉCLAIRÉ À FORT CONTRASTE**

(30) Priorité: 14.09.2018 FR 1858326
(71) Demandeur: Compagnie Plastic Omnium, 69007 Lyon (FR)
(72) Inventeur: KHAYAT, Issam, 69001 LYON (FR); VIDAL, Sophie, 01800 VILLIEU LOYES MOLLON (FR)
(74) Mandataire: LLR

(57) **Abrégé**

Elément de carrosserie (12) de véhicule automobile (10) comprenant une paroi (14) formée d'une matière transparente, derrière laquelle est disposée une source de lumière (25), une face externe de la paroi (14) étant revêtue d'un revêtement (20) semi transparent coloré, la face externe possédant, lorsque la source de lumière (25) est éteinte, des premières composantes trichromatiques prédéterminées.

La longueur d'onde du rayonnement émis par la source de lumière (25) est choisie en fonction de la coloration du revêtement semi transparent (20) de sorte que lorsque la source de lumière (25) est allumée, la face externe possède des secondes composantes trichromatiques prédéterminées, distinctes des premières composantes trichromatiques prédéterminées.

## Description

L'invention a pour objet un élément de carrosserie d'un véhicule automobile et plus particulièrement une pièce de style destinée à contribuer à l'aspect général extérieur du véhicule.

Ces pièces de style ou ces éléments de carrosserie ont pour objet de rehausser une ligne ou de souligner une forme dans le but de renforcer l'image que le constructeur souhaite associer à sa marque ou à son modèle de véhicule.

A titre d'exemple, les baguettes chromées courant le long de la partie latérale du véhicule, les protections de bas de caisse, l'emblème de la marque, les enjoliveurs de poignées de porte, les coques de rétroviseurs sont ces pièces de style dont le design fait l'objet d'un soin particulier de la part des concepteurs du véhicule. Par extension, toutes les pièces de la carrosserie visibles de l'extérieur et participant à l'aspect général du véhicule, telles qu'un ouvrant, un parechoc, une calandre, peuvent être considérées également comme des éléments de carrosserie ou des pièces de style entrant dans le champ d'application de l'invention.

Dans le but de renforcer l'effet produit par ces éléments de carrosserie, il a été proposé de placer une source lumineuse en arrière de la surface de l'élément de carrosserie formé d'un matériau transparent, et de modifier la transparence du revêtement recouvrant l'élément de carrosserie de manière à faire apparaître un effet lumineux lorsque les conditions d'éclairage extérieur sont insuffisantes et que la source de lumière est activée.

On rappelle ici que la transmittance d'un matériau est la fraction du flux lumineux le traversant. Ainsi la transmittance représente le rapport de l'intensité lumineuse transmise par le matériau sur l'intensité lumineuse incidente.

Un élément est qualifié de transparent lorsqu'il se laisse traverser par la lumière dans le domaine du visible. On considère qu'un élément ayant une transmittance de 90% environ est transparent. Un élément est qualifié de translucide lorsqu'il se laisse traverser par la lumière dans le domaine du visible, mais sans permettre de distinguer nettement les objets. On considère qu'un élément ayant une transmittance de 60% environ est translucide.

Ainsi, lorsque le véhicule est éclairé par la lumière du jour, le dispositif optique est éteint, et l'apparence de l'élément de carrosserie est donnée par le revêtement de peinture formant la couche externe de l'élément de carrosserie. A l'inverse, lorsque les conditions d'éclairage diminuent, ou parfois même en plein jour, comme cela est de plus en plus demandé par les designers des constructeurs automobiles, le dispositif optique est allumé et l'élément de carrosserie apparaît sous la forme d'une surface uniformément lumineuse.

En activant le dispositif d'éclairage, il est également possible de faire apparaître des motifs particuliers tels qu'un logo à la marque du constructeur, ou encore des éléments figuratifs particuliers qui restent invisibles lorsque le véhicule est éclairé par la lumière du jour.

Un tel dispositif d'éclairage est proposé dans le document FR 3 046 387, qui décrit un élément de carrosserie de véhicule automobile comprenant un corps formé d'une matière transparente, disposé de façon visible sur un support formant partie de la carrosserie du véhicule, dont une face est recouverte d'un revêtement de décor semi transparent. Un guide de lumière diffusant raccordé à une source de lumière est disposé entre le support et le corps de l'élément de carrosserie.

Néanmoins, il existe un besoin de faire en sorte qu'une fois le dispositif optique allumé, la surface illuminée de l'élément de carrosserie se distingue suffisamment bien du reste de la carrosserie. Par exemple, si l'on souhaite que la surface illuminée apparaisse d'une certaine couleur, qui diffère de celle du reste de la carrosserie, il convient de s'assurer que l'on obtient un contraste suffisant entre la couleur de la surface lumineuse et celle de la peinture du reste de la carrosserie. Ce contraste est particulièrement nécessaire dans le cas d'un éclairage du dispositif en plein jour, pour des raisons esthétiques. En effet, à l'heure actuelle, pour des pièces de carrosserie de grandes dimensions il n'existe pas de solution qui permette à la fois de rendre l'élément de carrosserie sensiblement identique au reste de la carrosserie lorsque la source de lumière est éteinte (on parle « d'invisibilité » à l'oeil nu) et de l'en distinguer très nettement lorsque la source de lumière est allumée.

L'invention a pour but de répondre à ce besoin en fournissant un élément de carrosserie de véhicule automobile comprenant une paroi formée d'une matière transparente, derrière laquelle est disposée une source de lumière, une face externe de la paroi étant revêtue d'un revêtement semi transparent coloré, la face externe possédant, lorsque la source de lumière est éteinte, des premières composantes trichromatiques prédéterminées,
**caractérisé en ce que** la longueur d'onde du rayonnement émis par la source de lumière est choisie en fonction de la coloration du revêtement semi transparent de sorte que lorsque la source de lumière est allumée, la face externe possède des secondes composantes trichromatiques prédéterminées, distinctes des premières composantes trichromatiques prédéterminées.

Grâce au fait que l'on adapte la longueur d'onde du rayonnement émis par la source de lumière en fonction de la coloration du revêtement semi transparent de sorte à obtenir des composantes trichromatiques prédéterminées, on peut obtenir un contraste important entre la couleur de la surface lumineuse et celle de la peinture du reste de la carrosserie lorsque la source de lumière est allumée, tout en rendant l'élément de carrosserie sensiblement identique au reste de la carrosserie lorsque la source de lumière est éteinte.

De préférence, la source de lumière comprend des diodes électroluminescentes ou des fibres optiques.

Selon un mode de réalisation particulier, la source lumineuse comprend des moyens de modulation de la longueur d'onde de son rayonnement. De tels moyens de modulation peuvent inclure le pilotage d'une source composée d'au moins trois sources de lumière, tels que des diodes électroluminescentes, de couleurs différentes, par exemple rouge-vert-bleu (diodes dites RGB) ou rouge-vert-bleu-blanc (diodes dites RGBW).

Selon un mode de réalisation particulier de l'invention, l'élément de carrosserie comprend une structure de carrosserie réalisée dans un matériau opaque, munie d'un insert formé d'une matière transparente disposé sur un support formant partie de la structure de carrosserie, une partie de la paroi extérieure de l'élément de carrosserie étant une paroi de l'insert, la source de lumière étant disposée entre le support et l'insert. Toute autre architecture permettant à la lumière de traverser la paroi de l'insert est envisageable, comme par exemple une source de lumière positionnée latéralement ou un guide de lumière qui transporte la lumière depuis une source lumière déportée.

Selon un autre mode de réalisation particulier de l'invention, l'élément de carrosserie comprend une structure de carrosserie réalisé dans un matériau transparent, la paroi étant une portion de la paroi de la structure de carrosserie.

Selon un mode de réalisation particulier de l'invention, le revêtement semi transparent comprend un primaire transparent dont l'épaisseur est de préférence comprise entre 5 et 15 micromètres, une base teintée dont l'épaisseur est de préférence comprise entre 2 et 30 micromètres, et un vernis transparent dont l'épaisseur est de préférence comprise entre 5 et 30 micromètres.

Selon un autre mode de réalisation particulier de l'invention, le revêtement semi transparent comprend un film translucide thermoformé coloré surmoulé, thermogainé ou adhésivé à la paroi, de préférence d'une épaisseur comprise entre 175 micromètres et 475 micromètres.

L'utilisation d'un film thermoformé surmoulé, thermogainé ou adhésivé avec la paroi permet de se passer d'une étape de pose de peinture succédant à l'étape de moulage de l'élément de carrosserie.

Selon une variante de l'invention, la paroi de la structure de la carrosserie est recouverte d'un film thermoformé coloré surmoulé par la paroi, comprenant une portion translucide recouvrant la paroi de l'élément de carrosserie et une portion opaque recouvrant le reste de la paroi de la structure de la carrosserie.

De préférence, le film thermoformé est réalisé par dépose successive d'une couche d'un film transparent, par exemple réalisé en polycarbonate ou polypropylène, et de plusieurs couches de décor colorées semi transparentes, par exemple composée de peinture ou encre appliquée par sérigraphie ou héliographie.

De préférence, la paroi est réalisée en un matériau amorphe, transparent à la lumière, tel que du Polycarbonate (PC), du Polyméthacrylate de Méthyle (PMMA), de l'Acrylonitrile Butadiène Styrène translucide (ABS), de l'Acrilonitrile Styrène Acrylate (ASA), du styrène acrilonitrile (SAN), un mélange d'Acrilonitrile Styrène Acrylate et de Polycarbonate, un mélange de Polycarbonate et de Polytéréphtalate d'Ethylène), ou encore de polyoléfine amorphe tels que cyclo-oléfines copolymères (COC) ou cyclo-oléfines-polymères (COP). L'utilisation de polyoléfine amorphe permet d'obtenir une très bonne adhérence chimique à la pièce de carrosserie réalisée en polypropylène, et permet donc l'insertion d'un élément transparent ou translucide par surmoulage. De plus, une telle adhérence, permet la transmission des efforts de l'élément transparent surmoulé vers le corps principal de la pièce en polypropylène.

Nous allons maintenant présenter un mode de réalisation de l'invention donné à titre d'exemple non limitatif et à l'appui des figures annexées sur lesquelles :
- la figure 1 représenté une vue en perspective de la partie avant d'un véhicule automobile muni de deux éléments de carrosserie selon l'invention ;
- la figure 2 représente une vue schématique d'une coupe transversale d'un élément de carrosserie d'un véhicule automobile selon un premier mode de réalisation de l'invention ;
- la figure 3 est une vue similaire à la figure 2 d'un élément de carrosserie d'un véhicule automobile selon un deuxième mode de réalisation de l'invention ;
- la figure 4 est une vue schématique d'une coupe transversale de la paroi d'un élément de carrosserie revêtue d'un revêtement selon un premier mode de réalisation de l'invention ;
- la figure 5 est une vue similaire à la figure 4 de la paroi d'un élément de carrosserie selon l'invention revêtue d'un revêtement selon un deuxième mode de réalisation de l'invention.

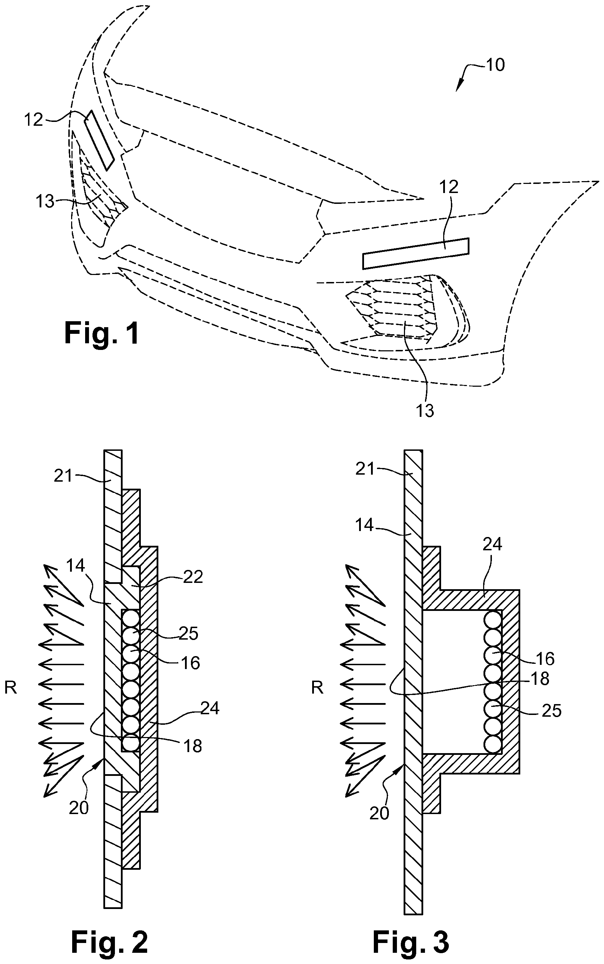

On a représenté à la figure 1 la partie avant 10 d'un véhicule automobile, munie de deux éléments de carrosserie 12 selon l'invention. Les éléments de carrosserie 12 sont, par exemple, disposés ici au-dessus des feux avant 13, pour rehausser la ligne des feux avant 13.

L'élément de carrosserie 12 comprend une paroi 14 formée d'une matière transparente, derrière laquelle est disposée une source de lumière 16.

La paroi 14 comporte sur sa face externe 18, c'est-à-dire sur la face du support regardant à l'extérieur du véhicule et visible de l'extérieur, un revêtement de décor semi transparent 20.

La face externe 18 possède, lorsque la source de lumière 16 est éteinte, des premières composantes trichromatiques prédéterminées.

Les premières composantes trichromatiques prédéterminées sont avantageusement choisies comme étant les mêmes que celles de la couleur qui a été retenue pour le restant de la carrosserie du véhicule automobile. Ainsi, lorsque la source de lumière 16 est éteinte, l'élément de carrosserie 12 ne peut pas être distingué, au toucher ou à l'oeil nu (ou du moins, pas à moins de s'en approcher de très près), du reste de la carrosserie de la partie avant 10 du véhicule.

Selon une premier mode de réalisation de l'invention représenté à la figure 2, l'élément de carrosserie 10 comprend une structure de carrosserie 21 réalisée dans un matériau opaque, munie d'un insert 22 formé d'une matière transparente disposé sur un support 24 formant partie de la structure de carrosserie. Dans cette variante, la paroi 14 est une paroi de l'insert 24, et la face externe 18 de la paroi la face externe de l'insert 24. La source de lumière 16 est disposée entre le support 24 et l'insert 22.

Selon un deuxième mode de réalisation de l'invention représenté à la figure 3, l'élément de carrosserie comprend une structure de carrosserie 21 réalisée dans un matériau transparent, la paroi 14 étant une portion de la paroi de la structure de carrosserie. La source de lumière 16 est là aussi disposée derrière la paroi 14, en étant par exemple retenue par un support 24. Toute autre architecture permettant à la lumière de traverser la paroi de l'insert est envisageable, comme par exemple une source de lumière positionnée latéralement ou un guide de lumière qui transporte la lumière depuis une source lumière déportée.

La paroi 14 est réalisée à l'aide d'un matériau amorphe, transparent à la lumière, tel que, à titre d'exemple et de manière non exclusive, du Polycarbonate (PC), du Polyméthacrylate de Méthyle (PMMA), de l'Acrylonitrile Butadiène Styrène translucide (ABS) ou encore de l'Acrilonitrile Styrène Acrylate (ASA), du styrène acrilonitrile (SAN), un mélange d'Acrilonitrile Styrène Acrylate et de Polycarbonate, un mélange de Poolycarbonate et de Polytéréphtalate d'Ethylène), ou encore de polyoléfine amorphe tels que cyclo-oléfines copolymères (COC) ou cyclo-oléfines-polymères (COP).

Les pièces réalisées à l'aide de ces matériaux thermoplastiques peuvent être obtenues par injection ou par moulage. La forme de la paroi 14 est alors adaptée à volonté pour s'harmoniser avec la forme de la carrosserie sur laquelle, ou autour de laquelle, l'élément de carrosserie 12 est disposé. L'épaisseur de la paroi 14 n'est pas limitée, et se détermine en fonction de la forme et de la rigidité de l'élément de carrosserie 12 que l'on cherche à réaliser ; elle peut donc varier de quelques millimètres à un, voire deux, centimètres, de préférence entre 2,5 mm et 4 mm.

Le support 24 est une pièce de la carrosserie réalisée de préférence à l'aide d'un matériau opaque tel que par exemple un Polypropylène chargé tel que celui qui est utilisé couramment dans l'industrie automobile pour réaliser les ouvrants ou les pièces rapportées sur la carrosserie telles que les coques de rétroviseurs. Le support 3 peut également se confondre avec la pièce de structure sur lequel l'élément de carrosserie 1 est fixé.

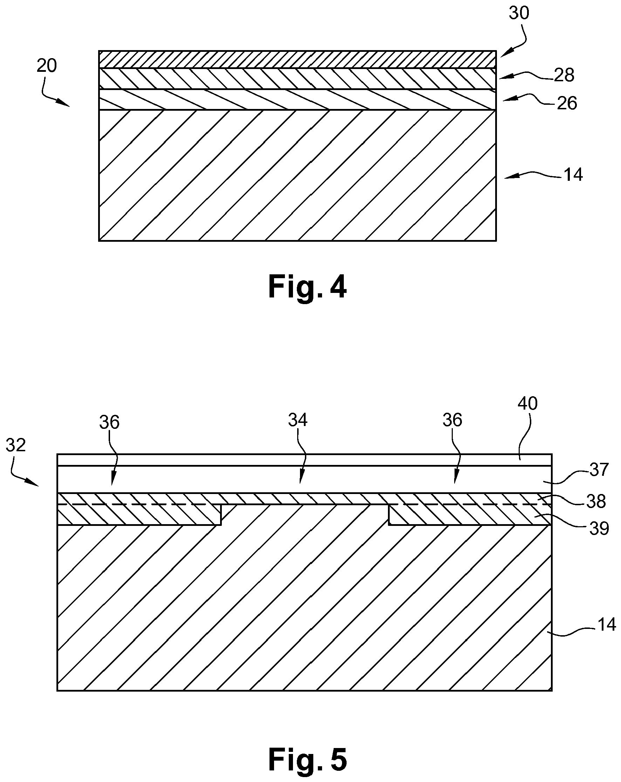

La source de lumière 16 est de préférence un dispositif optique comprenant des diodes électroluminescentes (LEDs) ou des fibres optiques de faible diamètre, qui peuvent être disposées en nappes ou en torons. De telles nappes sont décrites notamment dans FR 3 046 387, du même demandeur. Sur les figures 3 et 4, la source de lumière 16 comprend une pluralité de diodes 25.

Le revêtement semi transparent 20 a une première fonction esthétique qui est de conférer une teinte à l'élément de carrosserie 1 de sorte que la face externe de cet élément s'intègre aux pièces de carrosserie adjacentes. La couleur choisie est ici de préférence identique à la couleur des pièces de carrosserie.

La seconde fonction du revêtement de décor 14 est de laisser passer tout ou partie de la lumière émise par la source de lumière 16. Il importe donc de choisir un revêtement de faible épaisseur.

Plusieurs technologies sont disponibles pour remplir cette fonctionnalité. On pourra ainsi utiliser une peinture translucide ou un film translucide thermoformé.

Dans la première variante, illustrée à la figure 4, le revêtement semi transparent 20 comprend un primaire 26 qui est transparent et dont l'épaisseur est de préférence comprise entre 5 et 30 micromètres, une base teintée 28 dont l'épaisseur est de préférence comprise entre 2 et 15 micromètres, et un vernis transparent 30 dont l'épaisseur est de préférence comprise entre 5 et 30 micromètres.

Dans la deuxième variante, illustrée à la figure 5, la structure de la carrosserie est recouverte d'un film thermoformé 32 coloré translucide, comprenant une portion translucide 34 recouvrant la paroi 14 de l'élément de carrosserie et une portion opaque 36 recouvrant le reste de la structure 21 de la carrosserie.

Le film coloré translucide 32 positionné sur la face externe de la paroi 14 est de façon connue un film thermoplastique. Ce film 32 est, au choix, surmoulé, thermogainé, adhésivé ou tout autre procédé pour fixer le film 32 sur la paroi 14. De préférence, l'épaisseur du film 32 est comprise entre 175 micromètres et 475 micromètres.

Le film thermoformé 32 est réalisé par dépose successive d'une couche d'un film transparent 37, par exemple réalisé en polycarbonate ou polypropylène, et de plusieurs couches de décor colorées semi transparentes, par exemple composées de peinture ou encre appliquée par sérigraphie ou héliographie. En particulier, une première couche de décor fine 38 est appliquée à la fois dans la portion translucide 34 et la portion opaque 36, et une deuxième couche de décor épaisse 39 est appliquée dans la portion opaque 36. Ensuite le film 32 est thermoformé et découpé pour obtenir une préforme. Puis la préforme est positionnée dans le moule, de préférence côté matrice. La matrice forme avec le poinçon les deux parties du moule. La surface extérieure de l'élément de carrosserie est généralement celle qui est en contact avec la matrice. Ensuite, la matière transparente est injectée pour surmouler le film 32, généralement par la partie poinçon.

De préférence, le film thermoformé 32 est par exemple surmoulé par la paroi 14, c'est-à-dire qu'il est appliqué dans la matrice du moule de la paroi 14, qui est injectée sur ce dernier. Plus précisément, le film thermoformé 32 est constitué d'une couche de film transparent 37, puis la première couche de décor fine 38. Ce film 32 est aussi constitué d'une deuxième couche de décor épaisse 39 sur toute la première couche de décor fine 38 hormis une portion destinée à être la portion translucide 34. Dans des variantes, le film thermoformé 32 est thermogainé, ou adhésivé à la paroi 14.

Afin de protéger le film thermoformé 32 des agressions extérieures, il est possible de déposer un revêtement de protection 40 ou vernis sur la surface extérieure du film 32. De manière alternative, on peut aussi envisager l'utilisation d'un film décoré qui ne soit pas muni d'une couche de vernis lors de la dépose. Dans ce cas, la protection contre les agressions extérieures est obtenue lors d'une étape de peinture via la pose d'une couche de vernis.

La longueur d'onde du rayonnement émis par la source de lumière 16 est choisie en fonction de la coloration du revêtement semi transparent 20 de sorte que lorsque la source de lumière 16 est allumée, la face externe 18 possède des secondes composantes trichromatiques prédéterminées, distinctes des premières composantes trichromatiques prédéterminées.

Autrement dit, on choisit une longueur d'onde du rayonnement émis par la source de lumière 16 à la teinte du revêtement 20 pour que, lorsque ce rayonnement le traverse, on obtienne une couleur différente de celle du reste de la carrosserie, avec un fort contraste. Le revêtement de la paroi de l'élément de carrosserie fait donc office de filtre chromatique.

Par exemple, la couleur de la carrosserie du véhicule possédant des composantes trichromatiques correspondant un rouge, pour faire en sorte que l'élément de carrosserie 12 ne s'en distingue pas à l'oeil nu, la teinte du revêtement 20 est choisie de sorte que la face externe 18 possède des composantes trichromatiques correspondent au même rouge.

Si l'on désire, une fois la source de lumière 16 allumée, faire en sorte que la face externe 18 possède des composantes trichromatiques correspondant à une couleur contrastée, par exemple à un blanc, la longueur d'onde du rayonnement émis par la source de lumière 16 sera alors choisie avec une forte composante dans les verts. En effet, après son passage à travers le revêtement 12 ayant une teinte rouge, ce rayonnement apparaîtra blanc.

La longueur d'onde du rayonnement émis par la source de lumière 16 peut être choisie comme constante, connaissant au préalable la teinte de la paroi 14 et du revêtement 20, ou au contraire peut être modifiée à l'aide de moyens de modulation de la longueur d'onde du rayonnement de la source de lumière 16. De tels moyens de modulation peuvent inclure le pilotage d'une source composée d'au moins trois sources de lumière, tels que des diodes électroluminescentes, de couleurs différentes, par exemple rouge-vert-bleu (diodes dites RGB) ou rouge-vert-bleu-blanc (diodes dites RGBW).

L'invention n'est pas limitée aux modes de réalisation présentés et d'autres modes de réalisation apparaîtront clairement à l'homme du métier. Il est notamment possible de combiner les modes de réalisations évoqués ci-dessus.

### Liste des références

- 10 :: Partie avant de la carrosserie
- 12 :: Elément de carrosserie
- 13 :: Feux avant
- 14 :: Paroi de l'élément de carrosserie
- 16 :: Source de lumière
- 18 :: Face externe de la paroi
- 20 :: Revêtement semi transparent
- 21 :: Structure de carrosserie
- 22 :: Insert
- 24 :: Support de l'insert ou de la source de lumière
- 25 :: LEDs
- 26 :: primaire
- 28 :: base teintée
- 30 :: vernis transparent
- 32 :: Film thermoformé
- 34 :: portion translucide du film
- 36 :: portion opaque du film
- 40 :: revêtement de protection du film

## Revendications

1. Elément de carrosserie (12) de véhicule automobile comprenant une paroi (14) formée d'une matière transparente, derrière laquelle est disposée une source de lumière (16), une face externe (18) de la paroi étant revêtue d'un revêtement semi transparent (20) coloré, la face externe (18) possédant, lorsque la source de lumière (16) est éteinte, des premières composantes trichromatiques prédéterminées,
**caractérisé en ce que** la longueur d'onde du rayonnement émis par la source de lumière (16) est choisie en fonction de de la coloration du revêtement semi transparent (20) de sorte que lorsque la source de lumière (16) est allumée, la face externe (18) possède des secondes composantes trichromatiques prédéterminées, distinctes des premières composantes trichromatiques prédéterminées.

2. Elément de carrosserie (12) selon l'une quelconque des revendications précédentes, dans lequel la source de lumière (16) comprend des diodes électroluminescentes (25) ou des fibres optiques.

3. Elément de carrosserie (12) selon l'une quelconque des revendications précédentes, dans lequel la source lumineuse (16) comprend des moyens de modulation de la longueur d'onde de son rayonnement.

4. Elément de carrosserie (12) selon l'une quelconque des revendications précédentes, comprenant une structure de carrosserie (21) réalisée dans un matériau opaque, munie d'un insert (22) formé d'une matière transparente disposé sur un support (24) formant partie de la structure (21) de carrosserie, une partie de la paroi (14) extérieure de l'élément de carrosserie étant une paroi de l'insert (22), la source de lumière (16) étant disposée entre le support (24) et l'insert (22).

5. Elément de carrosserie (12) selon l'une quelconque des revendications 1 à 3, comprenant une structure de carrosserie (21) réalisé dans un matériau transparent, la paroi (14) étant une portion de la paroi de la structure de carrosserie (21).

6. Elément de carrosserie (12) selon l'une quelconque des revendications précédentes, dans lequel le revêtement semi transparent (20) comprend un primaire (26) transparent dont l'épaisseur est de préférence comprise entre 5 et 30 micromètres, une base teintée (28) dont l'épaisseur est de préférence comprise entre 2 et 15 micromètres, et un vernis transparent (30) dont l'épaisseur est de préférence comprise entre 5 et 30 micromètres.

7. Elément de carrosserie (12) selon l'une quelconque des revendications précédentes, dans lequel le revêtement semi transparent (20) comprend un film translucide thermoformé (32) surmoulé avec, thermogainé sur ou adhésivé à la paroi (14), de préférence d'une épaisseur comprise entre 175 micromètres et 475 micromètres.

8. Elément de carrosserie (12) selon la revendication 5, dans lequel la paroi (14) de la structure de la carrosserie (21) est recouverte d'un film thermoformé (32) coloré surmoulé par la paroi (14), comprenant une portion translucide (34) recouvrant la paroi (14) de l'élément de carrosserie et une portion opaque (36) recouvrant le reste de la paroi (3) de la structure de la carrosserie.

9. Elément de carrosserie selon la revendication 8, le film thermoformé (32) est réalisé par dépose successive d'une couche d'un film transparent (37), par exemple réalisé en polycarbonate ou polypropylène, et de plusieurs couches de décor colorées (38, 39) semi transparentes, par exemple composée de peinture ou encre appliquée par sérigraphie ou héliographie.

10. Elément de carrosserie (12) selon l'une quelconque des revendications précédentes, dans lequel la paroi (4) est réalisée en un matériau amorphe, transparent à la lumière, tel que du Polycarbonate (PC), du Polyméthacrylate de Méthyle (PMMA), de l'Acrylonitrile Butadiène Styrène translucide (ABS), de l'Acrilonitrile Styrène Acrylate (ASA), du styrène acrilonitrile (SAN), un mélange d'Acrilonitrile Styrène Acrylate et de Polycarbonate, un mélange de Poolycarbonate et de Polytéréphtalate d'Ethylène), ou encore de polyoléfine amorphe tels que cyclo-oléfines copolymères (COC) ou cyclo-oléfines-polymères (COP).
